# EUROPEAN PATENT APPLICATION

(11) **EP 0 999 461 A2**
(43) Date of publication of application: **10.05.2000**
(21) Application number: 99308847.5
(22) Date of filing: 05.11.1999
(51) Int. Cl.: G02B 6/34, H04J 14/02, G02F 1/313

(54) **Switchable filter**

(30) Priority: 06.11.1998 GB 9824245
(71) Applicant: HERIOT-WATT UNIVERSITY, Edinburgh EH14 4AS (GB)
(72) Inventor: Graham, Alan, Edinburgh EH11 1 HU (GB); Buller, Gerald Stuart, Edinburgh EH11 1LS (GB); Tooley, Frank Alan Paul, Edinburgh EH14 5BN (GB)
(74) Representative: Kerr, Sheila Agnes Fife

(57) **Abstract**

Switching apparatus for selecting a predetermined wavelength from a grid of incoming division multiplexed (WDM) signals. The apparatus comprises at least one tuneable filter, at least one means of varying the temperature of the filter and means for electrically controlling the temperature of the filter. The switching apparatus has applications in the field of optical communications.

## Description

This invention relates to an arrangement of optical filters that influence the transmission properties of a beam of light through a system.

The field of optical communications uses multiple wavelengths of light to carry different signals. These are combined together at the transmitter using a multiplexor and sent along a common optical fibre. They are sorted back into individual channels at the receiver using a de-multiplexor to split the wavelengths up. Up to 128 different wavelengths are used in this way in commercially available systems to increase the capacity of a link by the number of wavelengths and the functionality of the network. All current systems use fixed wavelengths on the International Telecommunication Union (ITU) G.mcs grid (100 GHz spacing, 193.1 THz reference frequency [1552.52 nm]). The multiplexor and de-multiplexor that is used to achieve this wavelength division multiplexing (WDM) is a filter. Filters are the most fundamental enabling technology that allows WDM to exist.

The property of a filter is to pass one (or more) wavelengths and block others. The performance of a filter is characterised by its spectrum. If we limit ourselves initially to the simplest case of a transmission filter, the spectrum is the value of transmission versus wavelength. A filter has high transmission at a number of wavelengths and low transmission at other wavelengths.

Currently, WDM systems operate with fixed filters. If a different channel is desired to be passed then the filter needs to be changed mechanically. In some cases this is achieved literally by removing it and replacing it with a different filter. A desirable device is a tuneable filter which can have its pass wavelength modified by an electrical signal to select the desired channel. Currently, tuneable filters are normally implemented by mechanical means e.g. using an electrical motor to translate or twist the filter or using a piezoelectric crystal to change the thickness of an air-spaced cavity. Mechanically tuned filters are undesirable in high reliability applications and are expensive. Another alternative is an acousto-optic filter (AOF). This uses a sound wave to deflect the light direction and acts as a filter because different wavelengths are deflected by sound by different amounts. AOF's do not have the required performance in terms of range of tuning, selectivity and precision.

Due to the limitations of current commercially-available filters, other implementations of tunable filters have been proposed. Heating to provide a change in refractive index of some part of the filter is used to implement a tunable filter. An example of this approach is inducing a transition from a single mode to a multimode waveguide using the temperature of a InP substrate (Ericsson Components and Telia Research, Fibre Systems, 1998). Another example is to use a system composed of cascading multiple filters each of which blocks a single wavelength and to tune the response of each filter by heating it or cooling it (Weber of Ericsson 1995 and Tseng et al of NSC, Taiwan, 1998). In 1992, Chung of AT&T patented a tunable etalon filter composed of a single thin-film filter containing a spacer of a high thermo-optic coefficient. The temperature of the filter changes its resonance wavelength. Only a small operating range is possible.

According to a first aspect of the invention there is provided a switching apparatus for selecting a predetermined wavelength from a grid of incoming wavelength division multiplexed (WDM) signals comprising:
at least one tunable comb filter with transmission characteristics which are temperature dependent;
at least one means of varying the temperature of the filter; and
means for electrically controlling the temperature of the filter;
wherein the peak position in the filter transmission spectrum is temperature dependent such that at a first predetermined temperature the filter transmits a first predetermined wavelength, and by varying the temperature the peak position in the filter transmission spectrum is varied such that the filter transmits a second predetermined wavelength at a second predetermined temperature.

Preferably the filter includes a spacer layer comprising a material with thermo-optic properties.

More preferably, the filter is a Fabry-Perot resonator type filter with a 0.1 mm to 1 mm thick spacer layer composed of a material with a high thermo-optic coefficient coated with a high reflectivity mirrors.

In a preferred embodiment, the filter comprises a plurality of cavities containing materials with different thermo-optic coefficients.

Preferably one cavity comprises a material with a low thermo-optic coefficient and the other may comprise a material with a high thermo-optic coefficient.

According to a second aspect of the invention there is provided a switching apparatus for selecting a predetermined wavelength from a grid of incoming wavelength division multiplexed (WDM) signals comprising:
a first tunable comb filter whose transmission characteristics are a function of temperature which receives as its input the incoming signals;
a second tunable comb filter whose transmission characteristics are a function of temperature which receives as its input the output of the first filter;
means for electrically controlling the temperatures of the first and second filters;
wherein the filters are cascaded and a peak-to-peak separation of the second filter's transmission spectrum is different by a small amount from a peak-to-peak separation of the first filter's transmission spectrum, and the predetermined wavelength is selected by varying the temperature of each filter such that the combined transmission spectrum is that of the predetermined wavelength, the peak position of each filter being dependent on the temperature of that filter.

More preferably, at least one filter is a Fabry-Perot resonator type filter with a 0.1 mm to 1 mm thick spacer layer composed of a material with a high thermo-optic coefficient coated with a high reflectivity mirrors.

Preferably, the transmission spectra of each comb filter is such that the peak-to-peak separation distance in the transmission spectra of the filter is substantially uniform for all peaks in the transmission spectra.

Preferably, the filter comprises a spacer layer comprising zinc selenide or cadmium sulphur selenide.

Alternatively, the device can be implemented using reflective filters.

Preferably, the temperature dependence of the first filter and the temperature dependence of the second filter are such that the peak positions in the transmission spectrum of the first filter are sufficiently different from the peak positions of the transmission spectrum of the second filter for there to be no leakage signal transmitted from the second filter whilst the switching apparatus is being tuned.

The switching apparatus may comprise more than two filters whose transmission characteristics are heat dependent, the filters being arranged such their combined transmission spectrum selects the predetermined wavelength according to their temperatures.

Alternatively, the switching apparatus comprises a fixed filter used in combination with the temperature dependent filters.

Embodiments of the present invention will now be described, with reference to the accompanying drawings which are by way of example only, and in which:-

Figure 1 illustrates the arrangement of cascaded active filters according to a preferred embodiment of the invention.

Figure 2 is an example of the spectra of the cascaded filters according to a preferred embodiment of the invention.

The present invention seeks to implement an electrically tuneable filter with the performance required to operate in a WDM system or other application. The invention is an arrangement of one or more filters that could be used to select any wavelength in the required grid of wavelengths used.

According to a first preferred embodiment, a single filter implementation of the invention is possible. A filter with a thick spacer layer (0.1 to 1 mm) is used such that the free spectral range (FSR- the distance in wavelength between successive resonances of the filter) is comparable but not equal to the spacing between the channels. An example is to use incoming channel spacings of 3.2 nm and a FSR of the filter of slightly more or less than this, say 3.0 nm. It is important that the spectral width of the passband of each of the several resonances used is as narrow as possible and these must be comparable to the difference between the FSR and the channel spacing. The ratio of the FSR to the full width at half maximum (FWHM) of the passband is the finesse of the filter and this must be as high as possible as it is approximately equal to the number of channels that each tunable filter can select.

The number of channels that can be handled by a system based on this approach can be made as large as desired by using an optical arrangement to divide the incoming channels in such a way that each tunable filter needs only to be able to select one channel from a subset of the total. An example of this is that if an incoming WDM signal is made up of 16 wavelengths with 0.8 nm spacing, it could be divided into 4 streams of 4 wavelengths on 3.2 nm spacing using an arrangement of fixed filters. The larger spacing of the 4 resulting streams would be easier for 4 tunable filters to select from than a single filter capable of working with such closely spaced wavelengths. A device suitable to perform this task is Cohen et al US patent 5680490.

The tunable filter passes a comb of wavelengths, the selected wavelength is that incoming wavelength which coincides with a resonance. If the filter is tuned by changing its temperature by a few degrees, the position of all of the resonances that make up the comb filter shift. A new wavelength is selected at a temperature that corresponds to one of the other filter resonances coinciding with the wavelengths of the incoming light. Only a small shift in the position of the resonance is needed to select a wavelength that is very different from that previously selected. For the example above, a shift of 0.2 nm in the filter would cause the selected wavelength to be shifted by 3.2 nm. The action of the filter is similar in action to that of a Vernier. A small change in the position of the peaks of the filter causes a large change in the selected wavelength.

The use of the Vernier effect to extend the tuning range of a filter has previously been proposed for implementation within a waveguide device using the electro-optic effect [Type III devices in H. Okayama and M. Kawahara, "Tunable filters with extended tunability", Jpn J. Appl. Phys. 31 1628-1635 (1992)].

Such an approach based on a single filter and a fixed grid of incoming wavelengths has one drawback that is avoidable if two cascaded filters are used. Consider the case that a wavelength (W) is currently selected and that the filter needs to be changed to select a different wavelength (Z). If a single filter is used, whilst the tuning of the filter is occurring, at some time all of the wavelengths which lie between W and Z will be passed by the filter. This could cause network security problems or cause there to be a crosstalk problem. It is highly desirable to implement a switched system rather than a tunable system such that only the selected wavelength is ever present in the output of the filter and no leaking of undesired wavelengths pccur whilst the switching operation is occurring.

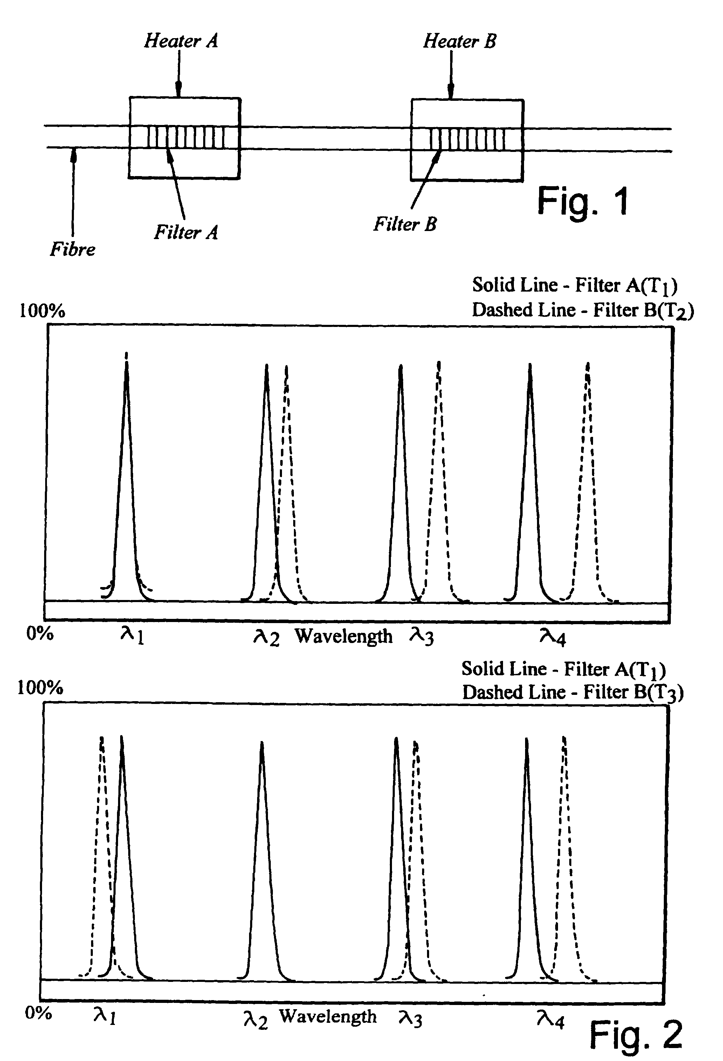

According to the second embodiment of the invention which can be used in a manner that overcomes this problem we propose to cascade 2 filters. Figure 1 shows an arrangement for the cascaded active filters according to a second embodiment of the invention.

Filter A is an arrangement of several films (typically 2 reflectors stacks made from dielectric and/or metal surrounding a spacer layer). The filter can for example be fabricated as a fibre device as shown in Figure 1 by using a material with a high thermo-optic coefficient as the core or/and cladding of a fibre.

Figure 2 shows the spectra of filters when cascaded according to the second embodiment. The transmission spectrum of filter A is shown in figure 2 (solid line). It consists of a comb of very narrow transmission passbands separated by larger transmission minima. The separation of the peak transmission points (λ₁, λ₂ etc.) is set by the design of the filter. It is typical to have the separation between peaks all very similar to one another. The position of the peaks, λ_{1,} is set by the design and by the temperature of the filter. The temperature of the filter can be varied using a small heater that is implemented for example by wrapping resistance wire around the part of the fibre containing the filter as shown in figure 1. The materials of the filter are chosen such that the positions of the filter passbands can be moved over the required range typically ∼1 nm by a change in temperature of only 10's of degrees. This is quite easy to achieve with a low-power electrical current. Suitable materials for the spacer are for example zinc selenide, cadmium sulphur selenide glasses and polymers. All have high thermo-optic coefficients, negligible absorption at the wavelength of operation and are suitable to be used as part of a waveguide, fibre of free-space implementation of this device.

The light that is transmitted through filter A is then incident on filter B. It has a somewhat similar design to filter A except that the separation between the peaks of transmission may be different by a small amount from filter A. The difference can be either larger or smaller, both arrangements would work. The position of the peaks of filter B is set by its design and the temperature of filter B. The temperature of filter B is set by a heater. These two spectra for the 2 filters can be achieved e.g. by using a simple Fabry-Perot etalon for both filters with a different spacer thickness for each or by a variety of other design techniques.

The combined transmission spectrum of both filters is the multiplication of one filter by the other. If the temperatures of the two filters are set appropriately then one wavelength is selected as that which is transmitted. If the temperature of one or both filters is changed then the channel selected can be changed.

The security and crosstalk problem alluded to above in connection with the single filter implementation can be avoided with this implementation if the temperature of both filters is adjusted in the correct way such that no light is transmitted whilst the switching operation is occurring.

The benefits of this scheme include 1) a large range of wavelengths can be selected, much larger than the tuning range of a single filter and 2) the scheme can be used to ensure that when the channel is changed only the desired channel is selected and none of the other channels leak through the filter during the selection process. This enhances system security. It implements a switched filter rather than a continuously tuned filter. 3) The size of the filter is more compact than other alternatives. 4) The cost of this filter to manufacture is extremely low. 5) The reliability of this filter is high as there are no moving parts.

### Variations of this scheme.

1) A single filter can be designed composed of 2 cavities containing materials with different thermo-optic coefficients, one high and one low. A single heater can be used to select the wavelength. One cavity would change optical thickness the other cavity would stay almost fixed. This would have the advantage of being a cheaper way to implement the idea.
2) The idea can be implemented with one or more of the filters operating in reflection rather than transmission.
3) The scheme can be implemented with more than 2 filters cascaded. There may be advantages in using 3 filters cascaded to suppress the crosstalk. In particular, one could use an extra filter that is fixed with 2 filters that can be shifted using temperature.
4) The filters can be used in other embodiments than being coated on the ends of the fibre. For example, current thin-film coating de multiplexors are used in free-space by collimating the light out of the fibre with a lens, and reflecting the light from filters coated onto glass held at an angle. This cascaded comb filter approach could be implemented in free-space or in fibre or in a combination of both.
5) Other filters can be used rather than thin-film filters. In particular, this scheme can be implemented using fibre Bragg gratings or arrays of optical waveguides or using interference based techniques.

Modifications and improvements may be incorporated herein without departing from the scope of the invention.

## Claims

1. A switching apparatus for selecting a predetermined wavelength from a grid of incoming wavelength division multiplexed (WDM) signals comprising:
at least one tuneable comb filter with transmission characteristics which are temperature dependent;
at least one means of varying the temperature of the filter; and
means for electrically controlling the temperature of the filter;
wherein the peak position in the filter transmission spectrum is temperature dependent such that at a first predetermined temperature the filter transmits a first predetermined wavelength, and by varying the temperature the peak position in the filter transmission spectrum is varied such that the filter transmits a second predetermined wavelength at a second predetermined temperature.

2. Switching apparatus as claimed in claim 1 wherein the filter includes a spacer layer comprising a material with thermo-optic properties.

3. Switching apparatus as claimed in claim 2 wherein the filter is a Fabry-Perot resonator type filter.

4. Switching apparatus as claimed in claim 3 wherein the filter includes a spacer layer having a thickness in the range of substantially 0.1 mm to substantially 1.0 mm.

5. Switching apparatus as claimed in claim 4 wherein the spacer layer comprises a material with a high thermo-optic coefficient.

6. Switching apparatus as claimed in claim 5 wherein the spacer layer is coated with a high reflectivity mirror.

7. Switching apparatus as claimed in any preceding claim wherein the filter comprises a plurality of cavities.

8. Switching apparatus as claimed in claim 7 wherein the cavities contain materials with different thermo-optic properties.

9. Switching apparatus as claimed in claim 8 wherein at least one said cavity comprises a material with a low thermo-optic coefficient and at least one other said cavity comprises a material with a high thermo-optic coefficient.

10. A switching apparatus for selecting a predetermined wavelength from a grid of incoming wavelength division multiplexed (WDM) signals comprising:
a first tuneable comb filter whose transmission characteristics are a function of temperature which receives as its input the incoming signals;
a second tuneable comb filter whose transmission characteristics are a function of temperature which receives as its input the output of the first filter;
means for electrically controlling the temperatures of the first and second filters;
wherein the filters are cascaded and a peak-to-peak separation of the second filter's transmission spectrum is different by a small amount from a peak-to-peak separation of the first filter's transmission spectrum, and the predetermined wavelength is selected by varying the temperature of each filter such that the combined transmission spectrum is that of the predetermined wavelength, the peak position of each filter being dependent on the temperature of that filter.

11. Switching apparatus as claimed in claim 10 wherein at least one said filter includes a spacer layer comprising a material with thermo-optic properties.

12. Switching apparatus as claimed in claim 10 or 11 wherein at least one said filter is a Fabry-Perot resonator type filter.

13. Switching apparatus as claimed in claim 12 wherein the Fabry-Perot resonator type filter includes a spacer layer having a thickness in the range of substantially 0.1 mm to substantially 1.0 mm thick.

14. Switching apparatus as claimed in claim 13 wherein said spacer layer comprises a material with a high thermo-optic coefficient.

15. Switching apparatus as claimed in claim 14 wherein said spacer layer is coated with a high reflectivity mirror.

16. Switching apparatus as claimed in any of claims 10 to 15 wherein the transmission spectra for each comb filter is such that the peak-to-peak separation distance in the transmission spectra of the filter is substantially uniform for all peaks in the transmission spectra.

17. Switching apparatus as claimed in any of claims 2 to 5 or 11 to 14 wherein said spacer layer comprises zinc selenide.

18. Switching apparatus as claimed in any of claims 2 to 5 or 11 to 14 wherein said spacer layer comprises cadmium sulphur selenide.

19. Switching apparatus as claimed in claim 10 wherein the filters are reflective filters.

20. Switching apparatus as claimed in any of claims 10 to 19 wherein the temperature dependence of the first filter and the temperature dependence of the second filter are such that the peak positions in the transmission spectrum of the first filter are sufficiently different from the peak positions of the transmission spectrum of the second filter for there to be no leakage signal transmitted from the second filter whilst the switching apparatus is being tuned.

21. Switching apparatus as claimed in any of claims 10-20 comprising more than two filters whose transmission characteristics are heat dependent, the filters being arranged such that their combined transmission spectrum selects the predetermined wavelength according to their temperatures.

22. Switching apparatus as claimed in any of claims 10-21, which further comprises a fixed filter in addition to the temperature dependent filters.
